# EUROPEAN PATENT SPECIFICATION

(11) **EP 3 352 476 B1**
(45) Date of publication and mention of the grant of the patent: **16.09.2020**
(21) Application number: 15903948.6
(22) Date of filing: 16.11.2015
(51) Int. Cl.: H04R 9/02, H04R 9/08, H04R 1/06

(54) **RECEIVER**
EMPFÄNGER
RÉCEPTEUR

(30) Priority: 15.09.2015 CN 201520712594 U
(43) Date of publication of application: 25.07.2018
(73) Proprietor: Goertek Inc., Wei Fang, Shandong 261031 (CN)
(72) Inventor: MAO, Linjin, Weifang Shandong 261031 (CN); CHEN, Gang, Weifang Shandong 261031 (CN)
(74) Representative: ABG Intellectual Property Law, S.L.
(86) International application number: PCT/CN2015/094684
(87) International publication number: WO 2017/045261

(56) References cited:
- EP-A2- 1 098 549
- WO-A1-2014/103278
- CN-A- 103 581 809
- CN-U- 203 984 670
- CN-Y- 2 632 952
- JP-B2- 3 454 720

## Description

### Technical Field

The present invention relates to an electroacoustic field, and more particularly, to a receiver.

### Background Art

A receiver is a device that can realize an electroacoustic energy conversion, which is widely used in electronic terminal devices such as mobile phones and telephones. The traditional receiver structure generally includes a magnetic circuit system, a vibrating system, and an outer housing for accommodating the magnetic circuit system and the vibrating system. In order to realize the electrical connection between the receiver and a terminal electronic device, a middle housing is usually integrated with an elastic piece by injection molding, and the elastic piece is electrically connected with a lead wire of a voice coil inside the receiver, while the outer side needs to be conducted through a spring structure. In the prior art, one end of the spring is usually soldered on the elastic piece of the middle housing, and another end is connected to the terminal electronic device, thereby realizing the transmission of the external current signal to the inside of the receiver.

However, as described above, since the spring is welded to the elastic piece of the middle housing, a product needs to be laterally extended on the basis of the dimension of the existing vibrating system to form a space for the spring assembly , thus increasing the length dimension of the product, failing to satisfy the restrictive requirement for a lateral assembly space of the terminal device, while the middle housing is located in the middle layer of the receiver product, and it is difficult to guide the spring to the vertical position of the vibrating system due to the restrictive requirement for the product assembly. Therefore, it is necessary to provide a new design approach of the electrical connection structure of the receiver so that the spring can be guided to the vertical position of the vibrating system without affecting the assembly and lateral space of the product.

Further teaching relevant for the present invention may be found in: CN 203 984 670 U, EP 1 098 549 A2 and WO 2014/103278 A1.

### Summary of the Invention

The technical problem to be solved by the present invention is to provide a receiver, which can guide a spring for connecting an external circuit to the top of a vibrating system without affecting an assembly of a product with a terminal device and a lateral space of the product by improving the position of the electrical connection structure thereof.

In order to achieve the above object, the present invention adopts the following technical solutions: provided is a receiver, comprising a peripheral housing, and a magnetic circuit system and a vibrating system which are accommodated in the peripheral housing, wherein the vibrating system comprises a vibrating diaphragm and a voice coil; the periphery housing comprises a first housing and a second housing matched with each other; the first housing and the second housing are provided with electrical connection structures conductive with each other, wherein a first elastic piece is provided on a sidewall of the first housing; one end of the first elastic piece is welded with a spring electrically connected with an external circuit, and another end is exposed at the outer side of the sidewall of the first housing; a second elastic piece is provided on a sidewall of the second housing; one end of the second elastic piece is electrically connected with a lead wire of the voice coil; and another end of the second elastic piece is exposed at the outer side of the sidewall of the second housing and is welded and fixed with a portion of the first elastic piece exposed at the outer side.

As a preferred embodiment, the vibrating system is accommodated in a cavity defined by the second housing; and the spring is coupled to the first housing and located above the vibrating system.

As a preferred embodiment, the first elastic piece comprises a first connecting end welded and fixed with the spring and a first exposed end exposed at an outer side of a sidewall of the first elastic piece; and the second elastic piece comprises a second connecting end electrically connected with the lead wire of the voice coil and a second exposed end exposed at an outer side of a sidewall of the second elastic piece.

As a preferred embodiment, a bonding wire is provided on the first exposed end; and the first exposed end and the second exposed end are welded and conducted by the bonding wire.

As a preferred embodiment, the first exposed end of the first elastic piece and the second exposed end of the second elastic piece extend horizontally to the outer side of the sidewall of the first housing and the outer side of the sidewall of the second housing of the receiver.

As a preferred embodiment, the first exposed end is bent in the direction toward the second housing and tightly attached to the sidewall of the first housing; and the second exposed end is correspondingly bent in the direction toward the first housing and lapped with the first exposed end.

As a preferred embodiment, the first exposed end and the second exposed end are fixed by laser-welding and are conductive with each other.

As a preferred embodiment, a bonding pad is provided on the second elastic piece; and the lead wire of the voice coil is spot-welded and fixed to the bonding pad.

As a preferred embodiment, the first elastic piece and the second elastic piece are disposed on the sidewalls of the first housing and the second housing at a same end.

As a preferred embodiment, a third housing and a hearing aid voice coil are further comprised, wherein the third housing is matched with the second housing and coupled at a bottom of the second housing; a central position of the vibrating diaphragm is coupled with a reinforcing part; a lower side of the vibrating diaphragm is coupled with a metal ring supporting the vibrating diaphragm; and the magnetic circuit system comprises a yoke, and a magnet and a washer which are fixed in the yoke.

As compared with the prior art, in the receiver of the present invention, an elastic piece structure (the first elastic piece) is added on a first housing, one end of the first elastic piece is welded with a spring, another end of the first elastic piece is exposed at an outer side of a sidewall of the first housing, one end of a second elastic piece disposed on a second housing is welded with the lead wire of the voice coil, another end of the second elastic piece is exposed at an outer side of a sidewall of the second housing, and the portions of the first elastic piece and the second elastic piece exposed at the outer side is welded and conducted by the bonding wire. Such a design of the electrical connection structure allows the spring to be transferred from the lateral position of the product to the top of the vibrating system, which can reduce the lateral dimension of the product without reducing the lateral dimension of the vibrating system (without impairing the performance of the product), satisfy the restrictive requirement for the lateral dimension of the product when assembled with the terminal electronic device.

### Brief Description of the Drawings

Fig. 1 is an exploded view of the structure of the receiver of the present invention;
Fig. 2 is a perspective view of the structure of the receiver according to Example 1 of the present invention;
Fig. 3 is a perspective view of the structure of the receiver according to Example 2 of the present invention.

### [Reference number]

1: first housing;
2: second housing;
3: first elastic piece;
31: first connecting end;
32: first exposed end;
320: bonding wire;
4: second elastic piece;
40: bonding pad;
41: second connecting end;
42: second exposed end;
5: spring;
6: voice coil;
61: voice coil lead;
7: vibrating diaphragm;
8: third housing;
9: reinforcing part;
10: metal ring;
11: yoke;
12: magnet;
13: washer;
14: hearing aid voice coil.

### Detailed Description of the Embodiments

The present invention will be described in more detail with reference to the accompanying drawings:

### Example 1:

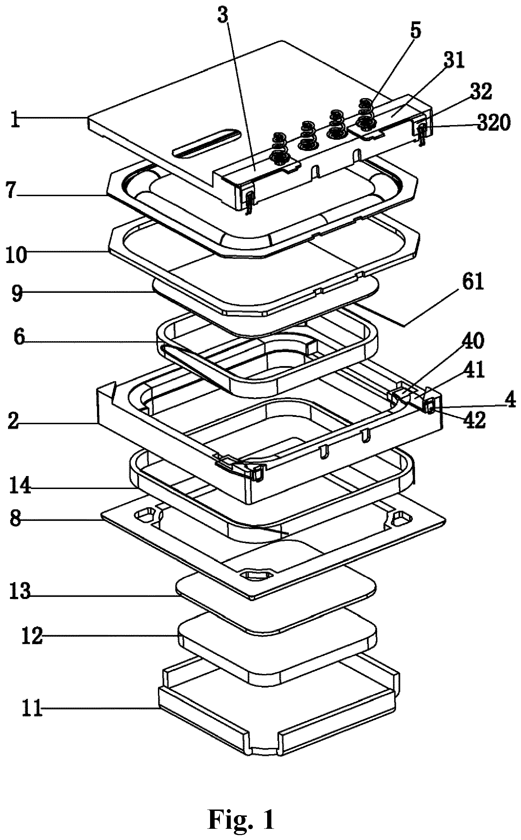

Referring to Fig. 1, the receiver of the present invention comprises a peripheral housing, and in particular, the peripheral housing includes a first housing 1, a second housing 2 and a third housing 8 matched with each other from top to bottom, which together form a cavity for accommodating a magnetic circuit system and a vibrating system. Further, the magnetic circuit system includes a yoke 11, a magnet 12 bonded and fixed on the yoke, and a washer 13 covering the surface of the magnet 12. The vibrating system includes a vibrating diaphragm 7 and a voice coil 6 bonded with the vibrating diaphragm 7. The vibrating diaphragm 7 is fixed to the second housing 2 by a metal ring 10 which can support the vibrating diaphragm 7. In addition, in order to enhance the performance of the product at a high frequency, a central position of the vibrating diaphragm 7 is also coupled with a reinforcing part 9, and the reinforcing part 9 generally has a rigid composite layer structure.

As described above, in the magnetic circuit system, a certain distance is provided between a sidewall of the yoke 11 and the magnet 12 to form a magnetic gap, and the lower end of the voice coil 6 is disposed in the magnetic gap. The voice coil 6 also includes a voice coil lead 61, and the voice coil lead 61 is electrically connected with the electrical connection structure of the receiver.

Referring to Fig. 1, the first housing 1 and the second housing 2 of the receiver in the present invention are provided with electrical connection structures conductive with each other: a sidewall of the first housing 1 is provided with a first elastic piece 3, which is integrally injection molded with the first housing 1 in a specific implementation, and one end of the first elastic piece 3 is welded with a spring 5 electrically connected with an external circuit, and the other end is exposed at the outer side of the sidewall of the first housing 1; and similarly, a second elastic piece 4 is integrally injection molded on a sidewall of the second housing 2, on which a bonding pad 40 is disposed, and one end of the second elastic piece 4 is welded and fixed (usually spot-welded) with the voice coil lead 61 through the bonding pad 40, and the other end is exposed at the outer side of the sidewall of the second housing 2. In particular, the first elastic piece 3 includes a first connecting end 31 and a first exposed end 32, wherein the first connecting end 31 is welded to the spring 5 and the first exposed end 32 is the portion exposed at the outer side of the sidewall of the first housing 1. Similarly, the second elastic piece 4 specifically includes a second connecting end 41 and a second exposed end 42, wherein the second connecting end 41 is spot-welded with the voice coil lead 61, and the second exposed end 42 is the portion exposed at the outer side of the sidewall of the second housing 2.

As described above, the receiver of the present invention has the electrical connection structures including the first elastic piece 3, the second elastic piece 4 and the spring 5 connected to an external circuit. If the internal and external circuits are implemented to be conducted, the first elastic piece 3 and the second elastic piece 4 has to be electrically conducted. However, in the present embodiment, the first elastic piece 3 and the second elastic piece 4 are connected through a wire bonding process, that is, a bonding wire 320 is disposed on the first exposed end 32 of the first elastic piece 3, and the second exposed end 42 of the second elastic piece 4 is welded and conducted with the first exposed end 32 of the first elastic piece 3 by the bonding wire 320, thereby achieving the electrical connection of the first elastic piece 3 with the second elastic piece 4, completing the conduction between the internal and external circuits, and thus, the current signal of the external circuit is transmitted to the first elastic piece 3 and the second elastic piece 4 in sequence by the spring 5, and finally reaches the voice coil 6 which is spot-welded and fixed with the second elastic piece 4. After receiving the current signal, the voice coil 6 does a reciprocating motion of cutting magnetic force line under the action of the electromagnetic field, which drives the vibrating diaphragm 7 to vibrate, and then sound waves are radiated to the outer side, thereby completing the conversion from the electric energy to the acoustic energy.

### Example 2:

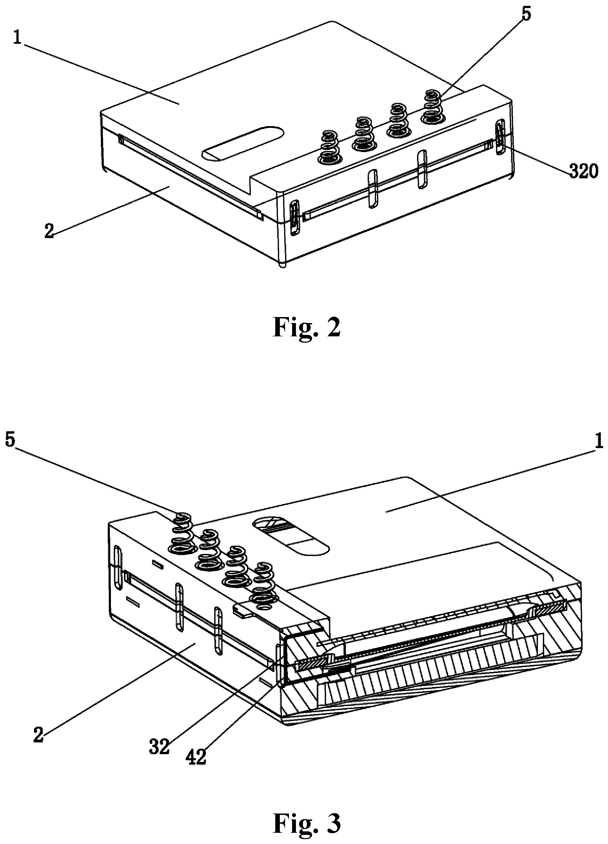

This embodiment is basically the same as that of Example 1 except that:
Referring to Fig. 3, in this embodiment, the conduct manner of the first elastic piece 3 with the second elastic piece 4 is different from that in Example 1. Specifically, the first exposed end 32 of the first elastic piece 3 and the second exposed end 42 of the second elastic piece 4 horizontally extend to the outer side of the sidewall of the first housing 3 and the outer side of the sidewall of the second housing 4, respectively. Further, the first exposed end 32 is bent in the direction toward the second housing 4 and tightly attached to the sidewall of the first housing 3, and correspondingly, the second exposed end 42 is bent in the direction toward the first housing 3 and can be lapped with the first exposed end 32, and the first exposed end 32 and the second exposed end 42 are fixed by laser-welding and are conductive with each other

In the technical solution, since the vibrating diaphragm 7 is fixed on the second housing 2, that is, the vibrating system is accommodated in the cavity defined by the second housing 2, and the spring 5 is coupled to the first housing 3. In other words, in the present technical solution, the spring 5 is moved from the existing lateral position to the top of the vibrating system, i.e., the vertical position, which can avoid the phenomenon that the restrictive requirement for the lateral dimension can not be satisfied in the prior art due to the lateral space setting of the spring. Meanwhile, such structure design does not reduce the dimension of the vibrating system, and therefore, the overall acoustic performance of the product won't be affected.

Preferably, in order to facilitate the assembly, the first elastic piece 3 and the second elastic piece 4 are disposed on the sidewalls of the first housing 1 and the second housing 2 at a same end.

Preferably, the receiver of the present invention further comprises a hearing aid voice coil 14.

It should be noted that, the foregoing embodiment only shows a receiver with a single magnetic circuit structure. Actually, the implementation of the present technical solution is not limited to the product with such a magnetic circuit structure, and is also applicable to a receiver with other magnetic circuit structures such as a magnetic circuit structure simultaneously including two side magnets or four side magnets or the like, but not limited thereto.

## Claims

1. A receiver, comprising a peripheral housing, and a magnetic circuit system and a vibrating system which are accommodated in the peripheral housing, wherein the vibrating system comprises a vibrating diaphragm (7) and a voice coil (6), the periphery housing comprises a first housing (1) and a second housing (2) matched with each other, and the first housing and the second housing are provided with electrical connection structures, wherein a first elastic piece (3) is provided on a sidewall of the first housing, one end of the first elastic piece is welded with a spring (5) electrically connectable to an external circuit, and another end of the first elastic piece is exposed at an outer side of the sidewall of the first housing; and a second elastic piece (4) is provided on a sidewall of the second housing, one end of the second elastic piece is electrically connected with a lead wire of the voice coil, and another end of the second elastic piece is exposed at an outer side of the sidewall of the second housing and is welded and fixed with a portion of the first elastic piece exposed at the outer side.

2. The receiver according to claim 1, wherein the vibrating system is accommodated in a cavity defined by the second housing, and the spring is coupled to the first housing and located above the vibrating system.

3. The receiver according to claim 1, wherein the first elastic piece comprises a first connecting end welded and fixed with the spring and a first exposed end exposed at an outer side of a sidewall of the first elastic piece, and the second elastic piece comprises a second connecting end electrically connected with the lead wire of the voice coil and a second exposed end exposed at an outer side of a sidewall of the second elastic piece.

4. The receiver according to claim 3, wherein a bonding wire is provided on the first exposed end, and the first exposed end and the second exposed end are welded and electrically connected by the bonding wire.

5. The receiver according to claim 3, wherein the first exposed end of the first elastic piece and the second exposed end of the second elastic piece extend horizontally to the outer side of the sidewall of the first housing and the outer side of the sidewall of the second housing of the receiver.

6. The receiver according to claim 5, wherein the first exposed end is bent in a direction toward the second housing and tightly attached to the sidewall of the first housing, and the second exposed end is correspondingly bent in a direction toward the first housing and lapped with the first exposed end.

7. The receiver according to claim 6, wherein the first exposed end and the second exposed end are fixed by laser-welding and are conductive with each other.

8. The receiver according to claim 1, wherein a pad is provided on the second elastic piece, and the lead wire of the voice coil is spot-welded and fixed to the pad.

9. The receiver according to claim 1, wherein the first elastic piece and the second elastic piece are disposed on sidewalls of the first housing and the second housing at a same end.

10. The receiver according to claim 1, further comprising a third housing and a hearing aid voice coil, wherein the third housing is matched with the second housing and coupled at a bottom of the second housing, a central position of the vibrating diaphragm is coupled with a reinforcing part, a lower side of the vibrating diaphragm is coupled with a metal ring supporting the vibrating diaphragm, and the magnetic circuit system comprises a yoke, and a magnet and a washer which are fixed in the yoke.

## Patentansprüche

1. Empfänger, aufweisend ein peripheres Gehäuse, und ein Magnetkreissystem und ein Schwingungssystem, die in dem peripheren Gehäuse aufgenommen sind, wobei das Schwingungssystem eine Schwingmembran (7) und eine Schwingspule (6) aufweist, das periphere Gehäuse (1) ein erstes Gehäuse (1) und ein zweites Gehäuse (2) aufweist, die zueinander passen, und das erste Gehäuse und das zweite Gehäuse mit elektrischen Verbindungsstrukturen versehen sind, wobei ein erstes elastisches Stück (3) an einer Seitenwand des ersten Gehäuses bereitgestellt ist, ein Ende des ersten elastischen Stücks mit einer Feder (5) verschweißt ist, die mit einer externen Schaltung elektrisch verbindbar ist, und ein anderes Ende des ersten elastischen Stücks an einer Außenseite der Seitenwand des ersten Gehäuses freiliegt; und ein zweites elastisches Stück (4) an einer Seitenwand des zweiten Gehäuses bereitgestellt ist, ein Ende des zweiten elastischen Stücks elektrisch mit einem Leitungsdraht der Schwingspule verbunden ist, und ein anderes Ende des zweiten elastischen Stücks an einer Außenseite der Seitenwand des zweiten Gehäuses freiliegt und mit einem Abschnitt des ersten elastischen Stücks, das an der Außenseite freiliegt, verschweißt und an diesem befestigt ist.

2. Empfänger nach Anspruch 1, wobei das Schwingungssystem in einer Kavität aufgenommen ist, die von dem zweiten Gehäuse definiert wird, und die Feder an das erste Gehäuse gekoppelt ist und sich oberhalb des Schwingungssystems befindet.

3. Empfänger nach Anspruch 1, wobei das erste elastische Stück ein erstes Verbindungsende, das mit der Feder verschweißt und an dieser befestigt ist, und ein erstes freiliegendes Ende, das an einer Außenseite einer Seitenwand des ersten elastischen Stücks freiliegt, aufweist, und das zweite elastische Stück ein zweites Verbindungsende, das elektrisch mit dem Leitungsdraht der Schwingspule verbunden ist, und ein zweiten freiliegendes Ende aufweist, das an einer Außenseite einer Seitenwand des zweiten elastischen Stücks freiliegt.

4. Empfänger nach Anspruch 3, wobei ein Bonddraht an dem ersten freiliegenden Ende bereitgestellt ist, und das erste freiliegende Ende und das zweite freiliegende Ende verschweißt und durch den Bond-Draht elektrisch miteinander verbunden sind.

5. Empfänger nach Anspruch 3, wobei das erste freiliegende Ende des ersten elastischen Stücks und das zweite freiliegende Ende des zweiten elastischen Stücks sich horizontal auf die Außenseite der Seitenwand des ersten Gehäuses und die Außenseite der Seitenwand des zweiten Gehäuses des Empfängers erstrecken.

6. Empfänger nach Anspruch 5, wobei das erste freiliegende Ende in einer Richtung hin zu dem zweiten Gehäuse gebogen ist und eng an der Seitenwand des ersten Gehäuses befestigt ist, und das zweite freiliegende Ende entsprechend in einer Richtung hin zu dem ersten Gehäuse gebogen ist und mit dem ersten freiliegenden Ende überlappt.

7. Empfänger nach Anspruch 6, wobei das erste freiliegende Ende und das zweite freiliegende Ende durch Laserschweißen befestigt sind und miteinander leitend sind.

8. Empfänger nach Anspruch 1, wobei ein Pad an dem zweiten elastischen Stück bereitgestellt ist, und der Leitungsdraht der Schwingspule an das Pad punktgeschweißt und an diesem befestigt ist.

9. Empfänger nach Anspruch 1, wobei das erste elastische Stück und das zweite elastische Stück ab Seitenwänden des ersten Gehäuses und des zweiten Gehäuses an einem gleichen Ende angeordnet sind.

10. Empfänger nach Anspruch 1, ferner aufweisend ein drittes Gehäuse und eine Hörhilfe-Schwingspule, wobei das dritte Gehäuse zu dem zweiten Gehäuse passt und an einer Unterseite des zweiten Gehäuse gekoppelt ist, eine zentrale Position der Schwingmembran mit einem Verstärkungsteil gekoppelt ist, eine untere Seite der Schwingmembran mit einem Metallring gekoppelt ist, der die Schwingmembran stützt, und das Magnetkreissystem ein Joch, und einen Magnet und eine Dichtung, die in dem Joch befestigt sind, aufweist.

## Revendications

1. Un récepteur, comprenant un boîtier périphérique, et un système formant circuit magnétique et un système vibrant qui sont logés dans le boîtier périphérique, le système vibrant comprenant une membrane vibrante (7) et une bobine mobile (6), le boîtier périphérique comprenant un premier boîtier (1) et un deuxième boîtier (2) adaptés l'un à l'autre, et le premier boîtier et le deuxième boîtier étant munis de structures de connexion électrique, une première pièce élastique (3) étant prévue sur une paroi latérale du premier boîtier, une extrémité de la première pièce élastique étant soudée à un ressort (5) apte à être connecté électriquement à un circuit externe, et une autre extrémité de la première pièce élastique étant exposée sur un côté extérieur de la paroi latérale du premier boîtier ; et une deuxième pièce élastique (4) étant prévue sur une paroi latérale du deuxième boîtier, une extrémité de la deuxième pièce élastique étant connectée électriquement à un fil conducteur de la bobine mobile, et une autre extrémité de la deuxième pièce élastique étant exposée sur un côté extérieur de la paroi latérale du deuxième boîtier et étant soudée et fixée avec une partie de la première pièce élastique exposée sur le côté extérieur.

2. Le récepteur selon la revendication 1, dans lequel le système vibrant est logé dans une cavité définie par le deuxième boîtier, et le ressort est relié au premier boîtier et situé au-dessus du système vibrant.

3. Le récepteur selon la revendication 1, dans lequel la première pièce élastique comprend une première extrémité de connexion soudée et fixée avec le ressort et une première extrémité exposée, exposée sur un côté extérieur d'une paroi latérale de la première pièce élastique, et la deuxième pièce élastique comprend une deuxième extrémité de connexion connectée électriquement au fil conducteur de la bobine mobile et une deuxième extrémité exposée, exposée sur un côté extérieur d'une paroi latérale de la deuxième pièce élastique.

4. Le récepteur selon la revendication 3, dans lequel un fil de liaison est prévu sur la première extrémité exposée, et la première extrémité exposée et la deuxième extrémité exposée sont soudées et connectées électriquement par le fil de liaison.

5. Le récepteur selon la revendication 3, dans lequel la première extrémité exposée de la première pièce élastique et la deuxième extrémité exposée de la deuxième pièce élastique s'étendent horizontalement vers le côté extérieur de la paroi latérale du premier boîtier et le côté extérieur de la paroi latérale du deuxième boîtier du récepteur.

6. Le récepteur selon la revendication 5, dans lequel la première extrémité exposée est pliée dans une direction tournée vers le deuxième boîtier et est étroitement fixée à la paroi latérale du premier boîtier, et la deuxième extrémité exposée est pliée de manière correspondante dans une direction tournée vers le premier boîtier et en chevauchement avec la première extrémité exposée.

7. Le récepteur selon la revendication 6, dans lequel la première extrémité exposée et la deuxième extrémité exposée sont fixées par soudage au laser et sont conductrices l'une de l'autre.

8. Le récepteur selon la revendication 1, dans lequel un plot est prévu sur la deuxième pièce élastique, et le fil conducteur de la bobine mobile est soudé par points et est fixé au plot.

9. Le récepteur selon la revendication 1, dans lequel la première pièce élastique et la deuxième pièce élastique sont disposées sur les parois latérales du premier boîtier et du deuxième boîtier à une même extrémité.

10. Le récepteur selon la revendication 1, comprenant en outre un troisième boîtier et une bobine mobile d'aide auditive, le troisième boîtier étant adapté au deuxième boîtier et relié à un fond du deuxième boîtier, une position centrale de la membrane vibrante étant reliée à une pièce de renforcement, un côté inférieur de la membrane vibrante étant relié à un anneau métallique supportant la membrane vibrante, et le système formant circuit magnétique comprenant une culasse, et un aimant et une rondelle qui sont fixés dans la culasse.
